# EUROPEAN PATENT APPLICATION

(11) **EP 2 312 505 A1**
(43) Date of publication of application: **20.04.2011**
(21) Application number: 09013062.6
(22) Date of filing: 15.10.2009
(51) Int. Cl.: G06Q 10/00

(54) **Method and system for monitoring and analyzing energy consumption in industrical, commercial or administrative buildings**

(71) Applicant: Bayer MaterialScience AG, 51368 Leverkusen (DE)
(72) Inventor: The designation of the inventor has not yet been filed
(74) Representative: Hössle Patentanwälte Partnerschaft

(57) **Abstract**

A computer-implemented method for monitoring and analyzing energy consumption of at least one industrial building is provided, the method comprising determining a building type specific theoretical energy consumption optimum value (TEO) based on a corresponding modeled building, identifying and grouping parameters contributing to an increased energy consumption of the building due to an actual use of the building (CEC), due to intrinsic characteristics of the building (BEO), due to optimised designated operating conditions in an actual state of the building (OEO), respectively, providing energy contribution rates of the respective parameters, partly by an automatic, and whenever required, periodic retrieval, and periodically graphing the energy consumption of the at least one building via a bar graph starting from the building type specific theoretical energy consumption optimum value and arriving at a current energy consumption of the at least one building by adding the provided single energy consumption rates of the respective parameters in groups thus forming an energy cascade which allows to monitor at least a part of the individual parameters and to compare the current energy consumption of the at least one building with an energy consumption of another building and/or with a previous energy consumption of the at least one building with respect to the individual parameters. Furthermore, an appropriate system is provided.

## Description

### Technical Field

This description relates to a method and system for monitoring and analyzing energy consumption in industrial, commercial or administrative buildings.

### Background

In the meantime, energy efficiency is a stated energy policy objective in nearly all countries. The arguments for improved energy efficiency in buildings focus on reduced energy costs to consumers, security of energy supply, improved comfort, lower greenhouse gas emissions, contribution to the rehabilitation of certain building types and a major contribution to the objective of sustainable development. The building sector is complex because it includes a wide range of building types for a wide range of uses. Thus, understanding how energy is used in buildings is complex. Buildings are not simply the sum of a lot of parts but they are a system, with the different parts interacting. Energy use is affected by human behavior.

An improvement in energy efficiency is to be regarded as any action undertaken by a consumer of energy products that reduces energy use per unit of output without affecting the level of service provided. Energy efficiency improvements can therefore be considered at all stages of the various fuel cycles. Greater energy efficiency can be brought about through hardware improvements, such as technological enhancements, software changes, such as improved energy management and better operational practices, or a combination of both.

Any construction, modification or expansion of buildings requires according to existing directives, as for example the European Energy Performance of Buildings Directive (EPBD), a specific certification, in Germany called "Energiebedarfsausweis", which gives information about the energy demand of a respective building. In the meantime there exist different tools used for a calculation of an energy demand of buildings. In Germany the regulation DIN V 18599 defines methods to calculate an energy efficiency of buildings. In Germany, the "BKI Energieplaner", among others, can be used as an implementation of the DIN method to perform such calculations. By means of such software tools a calculation of the net, final and primary energy demand for heating, cooling, ventilation, domestic hot water and lighting is possible. The software performs a holistic balancing of the entire building and is therefore suitable to determine the usages of various energies.

There are further national and international projects which are related to a calculation of an energy demand of buildings and to a resulting planning of new buildings in order to increase the energy efficiency. T^{*}SOL^{®} is an exemplary simulation program for the planning of design proceeds of solar thermal systems. It is also possible to perform a respective calculation of proceeds of solar thermal systems which serves to construct the respective solar thermal plant. This program simplifies the conception and planning of solar heat provision. By means of this program solar thermal systems can be simulated and appropriately defined. PV^{*} SOL^{®} is a further exemplary program which is available for purchase and which supports the sizing of PV systems and determines the economic efficiency. This program is a specific program for the simulation and design of photovoltaic systems.

A further project which refers to efficiency of building services installations is given by the directive VDI 2067. This directive provides guidance regarding the planning and valuation of energy-related technical equipment for buildings with regards to energetic, ecologic and economic aspects.

A further national and international project is given by the so-called Dynamic Equipment Handling (DEH) for air-handling systems.

Furthermore, there also exist software for a transient simulation of thermal systems, as for example the so-called TRNSYS program (Transient Systems Simulation program), a quasi world-standard and the program called DOE-2 (United States Department of Energy) which is primarily used in the Asian and American market. Other useful tools are the "Solar Computer VDI 2067" package used to calculate the energy requirements for heated and air-conditioned buildings and the "Dynamic Equipment Handling (DEH)" package of Zeller Consulting Suisse, used for air-handling systems. Weather and climate data can be downloaded from the Meteonorm DIN 4710 (Germany) and Meteonorm ASHRAE VDI 4701 sources.

### Summary

All these projects refer to building conceptions and respective energy demands and aim at increasing the energy efficiency of buildings. Therefore, it is necessary to look at all aspects along the life cycle of new and existing buildings by taking into account all or at least most of the influencing factors.

The present disclosure will put a specific focus on the planning and construction of industrial, commercial or administrative buildings by providing a method and a system for monitoring and analyzing energy consumption in industrial, commercial or administrative buildings.

In this context it has to be stated that buildings use around 40 per cent of all energy, even more in most developed regions, and more than 30 per cent of all greenhouse gas emissions can be attributed to buildings. In order to produce a set of recommendations to increase the energy efficiency of respective buildings and to develop a roadmap showing who needs to do what, it is first necessary to clearly analyze the energy consumption of different building types by using real data on different building types in developed and developing regions, warm and cold climates, etc.

There is also great potential to save energy by existing buildings. Often it will be possible to save a great percentage with a professional refurbishment and modern building services. In order to clearly plan such possible refurbishments a previous clear and transparent analysis of the energy consuming factors associated with a respective building and its respective use is necessary.

The prior art provides no management system which defines a procedure according to which the performance and energy efficiency of a building can be characterized formally and abstractly such that a presentation of deviations from an optimum is possible so that also different buildings can be compared with each other.

Therefore, there is a need to provide a possibility for a lasting and continuous monitoring and analyzing the energy consumption of respective industrial, commercial or administrative buildings. Thereby, it is desirable that the monitoring and analyzing procedure provides the user a complete transparency and a direct feedback about the success of interim actions.

There are a lot of factors which are responsible for an increased energy service demand. Among others there is, for example, an increased hourly use, an increased service provision, an increased use of IT and different build forms (open plan) which allow increased densities of occupation. An increased service demand as for example more air conditioning, more computers, larger houses, has contributed to an increased energy use in buildings. However, the application of improved technologies might moderate this growth. Building energy use will be driven by technological change but will also be influenced by other factors, including changes in use style, economic growth, changes in occupation size.

Although the complexity and interactions of these factors make it difficult to predict accurately future levels of building energy use, it might be worthwhile to estimate via a clear and transparent energy analysis of already existing or planned buildings future scenarios. By means by such a transparent and clear analysis it might be possible to suggest considerable potential to further improve energy efficiency in respective buildings. In many cases new technologies can considerably improve the energy efficiency. For example, many new commercial lighting technologies can provide a higher quantity of light and use far less energy. While many efficient technologies cost more to purchase, energy savings often more than repay the extra capital cost. A financial return offered by these technologies is typically far better than those offered by other personal financial investments. However, the decisions on purchasing energy using equipment require comparisons across many attributes such as performance, appearance, features and convenience. In order to accelerate the acquisition and use of many proven energy efficient technologies, a fast, easy and reliable method for monitoring and analyzing energy consumption in the respective buildings is necessary.

Therefore, it is an object of the present disclosure to provide a method and system for monitoring and analyzing energy consumption in industrial, commercial or administrative buildings as described in the following.

According to one general aspect, a computer-implemented method for monitoring and analyzing energy consumption of at least one industrial, commercial or administrative building comprises determining a building type specific theoretical energy consumption optimum value based on a corresponding modeled building, identifying and grouping parameters contributing to an increased energy consumption of the building due to an actual use of the building, due to intrinsic characteristics of the building, due to designed optimised operating conditions of the building, respectively. The method further comprises providing energy contribution rates of the respective parameters, partly by an automatic, where required periodic retrieval, particularly an on-line retrieval, and periodically graphing the energy consumption of the at least one building via a bar graph starting from the building type specific theoretical energy consumption optimum value and arriving at a current energy consumption of the at least one building by adding the provided single energy consumption rates of the respective parameters in groups thus forming an energy cascade which allows to monitor at least a part of the individual parameters and to compare, partly automatically, the current energy consumption of the at least one building with an energy consumption of another building and/or with a previous energy consumption of the at least one building with respect to the individual parameters.

The period for a retrieval of contribution rates of respective parameters and the period for graphing the energy consumption can be every suitable time period, respectively, such as a month, a year or any other time period. In order to get comparable results it might be useful, for example, with respect to climate associated and influenced parameters, to chose a yearly or a semi-yearly retrieval of respective energy consumption rates of those parameters. In such a case it might be further meaningful to gather then yearly or semi-yearly during a specific period of time repeatedly the respective energy consumption rates in order to get a reliable view and assessment. It is to be stated that with respect to climate sensible parameters an energy cascade which has been recorded during summer time cannot be compared with an energy cascade recorded during winter time. In such cases it might be valuable to perform a kind of adjustment for climate conditions. This means that a climate factor is to be introduced as a scale factor for the energy cascade such that the energy cascade can be normalized to the climate factor resulting in a climate independent energy cascade. Necessary weather and climate data can be downloaded, for example, from the Meteonorm DIN 4710 (Germany) and Meteonorm ASHRAE VDI 4701 sources.

Generally the period for retrieval of contribution rates of respective parameters is to be determined on a case-by-case basis. The energy cascade can be presented on a screen in a variety of ways and can also be printed out.

According to a possible implementation the energy consumption of the at least one building is normalized using the building type specific theoretical energy consumption optimum value, thus allowing a building type independent comparison of the energy consumption of the at least one building with an energy consumption of another building with respect to the individual parameters.

It is possible that the steps of determining the building type specific theoretical energy consumption optimum value based on a corresponding model building, and of identifying and grouping the parameters are standardized.

According to a possible implementation the modeled building is planned as an ideal building exempt from further influencing factors such as characteristics of a location infrastructure, climatic conditions, building construction such as building materials, building services, and building geometry. Those further influencing factors are taken into account by and are subsumed under the parameters due to intrinsic characteristics of the respective building. The building type specific theoretical energy consumption optimum value corresponds to an ideal. It is the lowest amount of energy needed for a specific building type if all energy losses, frictions and other inefficiencies could be eliminated.

It is possible to introduce intermediate stages within the progression of the energy cascade, each such intermediate stage allowing for a class of parameters contributing to an increased energy consumption of the building.

Thus, one intermediate stage can be defined as a building energy optimum (BEO) which takes into account, starting from the building type specific theoretical energy consumption optimum value (TEO), the intrinsic characteristics of the building, such as a location infrastructure associated with the building, and climatic conditions the building is exposed to.

A further intermediate stage can be defined as an operational energy optimum (OEO) which takes further into account, starting from the building energy optimum (BEO), optimised designated operating conditions which are assumed in an actual state of the building, the actual state being defined by specific parameters such as, for example, equipment, usage, thermal and cold insulation. By the term "equipment" are embraced, for example, heating systems, cooling systems, regenerative energy systems, heat recovery / integration systems, lighting, ventilation, shading facilities and control systems. The thermal and cold insulation considers inter alia heat losses via a thermal relevant surface. The term "usage" particularly refers to utilization variants such as modifications of building zones, for example, as open-plan areas or closed smaller units.

In order to reach the final stage of the energy cascade, namely the current energy consumption, an actual use of the building is further considered in the intercept of the energy cascade. That means that actual operating conditions are taken into account as, for example, deviations from ideal energetic settings, deviations from ideal installation settings, partial utilization of the building and deviations of the climatic conditions from statistic mean values.

Deviations from ideal energetic settings can arise, for example, due to individual behavior or due to legal requirements.

Deviations from ideal installation settings can be related to air heating, air change, air moistening, air quality, lighting, temperature profiles, and a discrepance between a period of use and a period of operation of respective installations. Thereby, it is possible that any deviation from the ideal settings of one or more of the above mentioned items is due to individual requirements.

Partial utilization of the building is possible temporary due to vacation time, relocations, any downtimes, a reduced occupancy rate or a reduced time of use.

The remaining unidentifiable dynamic parameters contributing to an increased energy consumption are globally summarized as losses.

It is sensible that the parameters due to an actual use of the building are classified/subdivided in static parameters and dynamic parameters, respectively.

Furthermore, according to a further implementation, the step of periodically graphing the energy consumption of the at least one building via a bar graph starting from the building type specific theoretical energy consumption optimum value and arriving at a current energy consumption of the at least one building by adding the provided, partly automatically retrieved single rates of the respective parameters in groups, comprises a periodically still more often repeated re-graphing of the rates of the dynamic parameters associated with the actual use of the building. That means that particularly the dynamic parameters associated with the actual use of the building are monitored in shorter time intervals than the rest of the other influencing factors. This shorter time interval is to be chosen in dependence on experienced data with respect to the fluctuation of the respective parameters. A monthly, daily or even shorter monitoring and thus a monthly, daily or correspondingly shorter re-graphing of exactly those corresponding parameters in the energy cascade might be appropriate. Such an online monitoring ensures sustainability of operational improvements. However, it has to be considered that it might be advantageous to monitor all parameters which are associated and influenced by climate and weather conditions at an annual rate in order to get a diagnostically conclusive result. Otherwise it might be favourable to implement the climate factor in a normalization procedure leading to a climate independent energy cascade, also referred to as adjustment for climatic conditions (in German called "Witterungs-bereinigung").

Furthermore, it is possible that the method further comprises the step of computing for at least one of the parameters of the energy cascade a best demonstrated mode, thus demonstrating an expected proportion of the respective energy contribution rate of the at least one parameter. It is evident for a person skilled in the art, that such kind of best demonstrated mode can be computed for any number of the entirety of the defined parameters, respectively.

The best demonstrated mode may be derived from a history of the energy contribution rates of the at least one parameter measured over the course of a pre-defined time period wherein a pre-given percentage of the lowest of those energy consumption rates is used for determining the best demonstrated mode. This percentage may be in the range of 1% to 20%, particularly about 10%. The energy contribution rates of the at least one parameter may continuously be monitored and controlled on the basis of the best demonstrated mode.

Furthermore, it is possible to use the best demonstrated mode to build a predictive model of pattern of behavior of the respective at least one parameter over time. This can be done naturally for any suitable number of the entirety of the afore identified parameters.

Furthermore, the best demonstrated mode may continually be refined in response to new measurements of the energy contribution rates of the at least one parameter.

According to a further implementation the best demonstrated mode is used to build a temporary model of the current behavior of the at least one parameter.

According to yet another aspect, it is possible that the method further includes that an alert is triggered when the energy consumption rate of the at least one parameter is detected to deviate unexpectedly from the best demonstrated mode.

According to still a further aspect, a computer-program product tangibly embodied in an information carrier comprises instructions that when executed cause a processor to perform an afore-mentioned method to monitor and analyze energy consumption of at least one industrial, commercial or administrative building.

According to the proposed method, value targets are gained by using an idealized optimum for an industrial, commercial or administrative building such that a gap between an actual state and an ideal state can be made visible. By graphing the energy consumption it becomes possible to visualize a level of performance at any time. Tracking and steering energy efficiency improvements can be achieved.

Furthermore, the method allows a realization of a consistent monitoring and a control system which leads to comparative indicators (key performance indicators), thus allowing a comparison of different buildings and different used technologies. The proposed method takes into account that a measured energy consumption consists of different contributions.

Furthermore, according to the proposed method an automatic assignment of the various contributions to the energy consumption to appropriate categories is realized. Thereby, different influencing factors can always be taken into account and made visible for a respective user.

According to the proposed method the first step refers to a determination of a building type specific theoretical energy consumption optimum value based on a corresponding modeled building. That means that primarily a building has been modeled and the respective energy consumption optimum value has been derived therefrom. The performance data of this optimum configuration has been computed by means of respective IT tools, partly in combination for the energy consumption with, for example, BKI Energieplaner, other implementations of the DIN, T-Sol™, PV-Sol™ and Excel™ programs. The so computed optimum value includes those characteristics which are given by natural law, but do not comprise any further loss sources which are normally present in reality.

As further proposed by a possible implementation of the claimed method the computed building type specific theoretical energy consumption optimum value can be used for performing a normalization of an actual energy consumption of a respective operated industrial, commercial or administrative building in an actual state by using this optimum energy consumption value as a normalizing factor.

Furthermore, a further dimensionless factor can be computed based on the building type specific theoretical energy consumption optimum value according to the following formula:

T² = TO/CC wherein TO corresponds to the theoretical energy consumption optimum value and CC corresponds to the current energy consumption of the respective industrial, commercial or administrative building.

This computed dimensionless factor allows a comparison of different constructions, geometries, technologies and building services which are to be used by means of respective industrial, commercial or administrative buildings.

According to the general proposed method, after determining a building type specific theoretical energy consumption optimum value based on a corresponding modeled building, it is further proposed to identify and group parameters contributing to an increased energy consumption of the building due to an actual use of the building, due to intrinsic characteristics of the building, due to optimised designated operating conditions in an actual state of the building, respectively. That means that energy consumption sources have to be identified and then classified with respect to their respective sources. According to such a classification the found and identified parameters have to be grouped accordingly. After that, according to a further method step the respective energy contribution rates of the respective parameters have to be provided, partly automatically, and whenever required periodically, retrieved. By usage of the classified parameters together with their respective energy contribution rates, the energy consumption of the at least one industrial, commercial or administrative building is graphed via a bar graph starting from the theoretical energy consumption optimum value and arriving at a current energy consumption of the at least one building by adding successively the provided, partly automatically retrieved single energy consumption rates of the respective parameters in groups thus forming an energy cascade which allows to monitor, particularly to online monitor at least a part of the individual parameters and to compare, particularly automatically, the current energy consumption of the at least one building with an energy consumption of another building and/or with a previous energy consumption of the at least one building with respect to the individual classified parameters. That means that the different grouped parameters are to be arranged in form of an energy cascade. Besides those energy consumption sources which could be identified concretely, a further category is to be introduced in which all effects without explicit assignment to any one of the concrete categories are to summarized. Since the categorized sources of energy consumptions can be quantified by the respective provided, partly retrieved energy consumption rates, the presentation of the respective energy cascade clearly reflects the performance of the respective industrial, commercial or administrative building with regard to the different identified energy consumption sources and, thus, gives a possibility to enhance studiously energy efficiency by regarding the single parameters contributing to the energy consumption of the whole building. Thereby, it is possible to introduce priorities for the different parameters according to which an enhancement of the energy efficiency of the underlying industrial, commercial or administrative building is to be addressed. In the event that an assignment of energy consumption rates to individual parameters is difficult or even impossible, it might be useful to perform a kind of itemization of a measured energy consumption on the basis of theoretical knowledge. Thus, electrical energy whose consumption can be read from an appropriate meter can be broken down into parameters such as EDV, climate, and lighting. Otherwise, the energy consumption rates can often also be approximated, such as the energy consumption rate of lighting which can indirectly be approximated via the building occupancy. The building occupancy can be determined by means of a time recorder, for example.

The presentation of the energy consumption of a respective industrial, commercial or administrative building in form of an energy cascade allows a clear and unambiguous analysis of a deviation of the energy consumption of the real underlying industrial, commercial or administrative building from the building type specific theoretical energy consumption optimum value based on a corresponding modeled building. This deviation analysis which can be derived from the energy cascade can be used in order to prioritize measures to be performed in order to decrease the energy consumption by decreasing single selected energy consumption rates of specific parameters. There are several categories in which it may seem to be difficult to achieve an enhancement concerning the energy consumption rates of the included parameters. However, it will most probably be possible to achieve easily an enhancement with respect to an energy consumption in another category comprising parameters which can be easily influenced. Thus, efficient improvements of the overall energy consumption become possible.

According to another aspect, an energy management system includes a modeling means configured to determine, based on a modeled building, a building type specific theoretical energy consumption optimum value, an analyzing means configured to identify and group parameters contributing to an increased energy consumption of the building due to an actual use of the building, due to intrinsic characteristics of the building, due to optimised designated operating conditions in an actual state of the building, respectively. The proposed system further comprises a provisioning means configured to provide energy contribution rates of the respective parameters, the provisioning means comprising a retrieval means configured for an automatic, and whenever required periodic retrieval of energy contribution rates of at least a part of the respective parameters. Furthermore, the proposed system comprises a monitor and control means configured for periodically or real-time graphing the energy consumption of the at least one building via a bar graph starting from the theoretical energy consumption optimum value and arriving at a current energy consumption of the at least one building by adding the provided, partly retrieved single energy consumption rates of the respective parameters in groups thus forming an energy cascade which allows to monitor, if applicable to online monitor, at least a part of the individual parameters and to compare the current energy consumption of the at least one building, particularly automatically with an energy consumption of another building and/or with a previous energy consumption of the at least one building with respect to the individual parameters.

It is possible that the monitor and control means of the proposed system is further configured to present the energy consumption of the at least one building normalized using the building type specific theoretical energy consumption optimum value, thus allowing a building type independent comparison of the energy consumption of the at least one building with an energy consumption of another building with respect to the individual parameters.

The modeled building used by the proposed system may be planned as an ideal building for a specific industrial, commercial or administrative use.

Furthermore, the monitor and control means may be configured to periodically still more often re-graph the energy consumption rates of the parameters associated with the actual use of the building. This means that the time interval for re-graphing the energy consumption rates of those parameters may be chosen shorter than the period chosen for the graphing of the energy cascade as a whole. Thereby, it is taken into account that those parameters might change more often. The respective time interval for the re-graphing with respect to those parameters is to be chosen accordingly. However, climate associated and influenced factors have to be considered in direct dependence on actual climate conditions, and, therefore, probably only at an annual rate.

According to a further implementation of the proposed system the monitor and control means is further configured to compute for at least one of the parameters of the energy cascade a best demonstrated mode, thus demonstrating an expected proportion of the respective energy contribution rate of the at least one parameter. This expected proportion is to be interpreted as being attributed to the real situation in contrast to the fictitious situation of the model building.

It is possible that the best demonstrated mode according to a further implementation is derived from a history of the energy contribution rate of the at least one parameter measured over the course of a pre-defined time period wherein a pre-given percentage of the lowest of those energy consumption rates is used for determining the best demonstrated mode. The pre-defined time period can here be in the range of several hours to several months or even several years. The percentage can be chosen, for example, from 1% to 20%.

The monitor and control means may further be configured to continuously monitor and control, on the basis of the best demonstrated mode, the energy contribution rates of the at least one parameter.

According to a further implementation of the proposed system, the best demonstrated mode is used by the modeling means to build a predictive model of a pattern of behavior of the respective at least one parameter over time. The best demonstrated mode may be continually refined by the monitor and control means, in response to new measurements of the energy contribution rates of the at least one parameter retrieved by the retrieval means. The best demonstrated mode may further be used by the modeling means to build a temporary model of the current behavior of the at least one parameter.

The monitor and control means of the proposed system may further be configured to trigger an alert when the energy consumption rate of the at least one parameter is detected to deviate unexpectedly from its best demonstrated mode.

The present disclosure is based on the thought that each industrial, commercial or administrative building has different parameters which contribute to an increased energy consumption of the respective building and which can be grouped according to their respective kind of influence to the energy consumption, namely due to an actual use of the building, due to intrinsic characteristics of the building, or due to optimised designated operating conditions in an actual state of the building. Optimised designated operating conditions in an actual state of the building are generally given by technological guidelines and probably specific to a sector of industry.

Also relevant in terms of energy is a purchase of energy, for example a purchase of electricity, gas, oil, water, and a discharge of energy, for example a discharge of CO₂ emissions, and waste water. This item can be attributed to the infrastructure of the building as a part of the intrinsic characteristics of the building.

For a lasting reduction in the energy consumption, the present disclosure provides for an energy consumption of at least one industrial, commercial or administrative building to be considered as an energy cascade taken into account all parameters contributing to the increased energy consumption of the building with respect to a building type specific theoretical energy consumption optimum value based on a corresponding modeled building, and for analyzing this energy consumption with respect to potential energy reductions which are to be determined. Including all parameters or at least all core parameters contributing to an increased energy consumption of the industrial, commercial or administrative building due to different aspects in considerations for reducing the energy consumption a detailed analysis of the different parameters and thus a lasting and comprehensive reduction in the energy consumption rates of the respective parameters is made possible. It is only by considering the resulting energy cascade as envisaged by the present disclosure that a chronological and partial distribution of all energy contribution rates in large and complex industrial, commercial or administrative buildings can be registered and all potential energy reductions can be determined and exhausted.

It is possible to normalize the individual energy consumption rates of the energy cascade by dividing the respective energy consumption rates through the determined building type specific theoretical energy consumption optimum value based on a corresponding modeled building so that a building type independent comparison of the energy consumption of the at least one building with an energy consumption of another building with respect to the individual parameters is possible. Since the whole energy cascade can in principle then be considered irrespective of the specific building a benchmark that is independent of the specific building is possible in the analysis of a current state of the industrial, commercial or administrative building. Such a benchmark can indicate potentials for reducing the energy consumption. The present disclosure proposes to take into account all or at least most of the influencing parameters in detail such that individual energy consumption rates can be determined and allocated to specific consumers. Energy flows can be followed and energy-relevant data can be stored and analyzed.

By means of the proposed method which can be standardized in a holistic consideration, a determination of potential energy reductions for the at least one industrial, commercial or administrative building is possible while transparency and consistency in the whole process is guaranteed. Thus, a comprehensive and systematic analysis of energy reductions of the at least one building is made possible and a determination of potential energy reductions and an elaboration of measures for reducing energy consumptions are made easier. With the aid of the proposed method, experience and best practice which is already available in a large number of industrial, commercial or administrative buildings can be utilized jointly and benchmarks can then be made for example with an average for the specific industrial use for the respective industrial, commercial or administrative building. Furthermore, by means of the proposed method a systematic working on clearly defined rules is made possible and quality control and assurance is made easier. In spite of a possible high complexity of an industrial, commercial or administrative building all potentials for reducing energy consumptions can thus be determined and exhausted.

In the present case, the proposed method comprises a number of steps which are suitable to be standardized. By means of such a stepwise procedure, it becomes possible to compare different buildings despite their inherent complexities.

Once the attribution of energy consumption contributions has been carried out in such a standardized and straightforward way, some of the categories offer a multitude of energy savings potentials to be harvested. E.g. the category "partial utilization" corresponds to the specific energy losses when the building unit is only partially used. While this contribution becomes clearly visible using this system, this visibility creates two opportunities:
(i) the unit's management can strive to plan the utilization in such a way, that partial utilization will be avoided as much as possible, thus energy losses due to using the building only partially will be greatly avoided and the amount of avoided energy waste can be planned, and
(ii) the unit's management can further strive to optimize the unit's energy consumption characteristics under partial use when partial use cannot be avoided.

The latter becomes easy as the disclosed system continuously provides the user with best demonstrated mode characteristics and predictive models based on the latter.

Consequently, planning managers cannot only react to changes and design their actions accordingly to minimize the energy consumption under given circumstances, but can also plan the future energy consumption by using their projections on partial use, the available information on best demonstrated mode characteristics and the predictive model which is a system feature.

Further dwelling on planning capabilities of the system, the system could be used to assess, manage and optimize energy consumption properties of similar or different buildings in entirely different locations. Once the energy consumption situation of a respective building has been measured and assigned to the different categories of the energy cascade, and once best demonstrated modes of respective parameters and other properties of the building have been set up to function with the disclosed method, comparisons of the building can be carried out regardless of the specific nature and location of the building can e.g. be compared regarding the steepness of their partial utilization (based on best demonstrated modes) curves, with this comparison providing stimulus to look for the reasons behind the occurring differences. Upper management could look periodically over the differences, the improvement plans of the inferior units and the degree of fulfillment of those plans after an agreed-to time span. Summarizing, the disclosed method and system again provide deeper insight into the energy efficiency properties of a building, and thus enable building management to more specifically address suboptimal equipment configurations and practices. Using the disclosed method and system, this improvement process happens more directed than without it, because categorization and the analytic tools of the system provide additional guidance and enablers for such highly efficient improvement process.

An initial assessment of the industrial, commercial or administrative building with regard to existing potentials for reducing the energy consumption rates of the individual parameters is made possible by the fact that with the aid of the proposed diagnostic method the energy consumption is analyzed, individual parameters contributing to an increased energy consumption are identified and grouped according to their respective origin. Thereby, weak points can be identified and measures for improvement can be elaborated.

Since the energy cascade in a normalized form can be viewed as independent of the individual industrial, commercial or administrative building, the diagnosis thereof permits a comparison among a large number of industrial, commercial or administrative buildings. Furthermore, the assessment of the industrial, commercial or administrative building is possible in a simple and rapid way.

Following the analysis of the different parameters contributing to an increased energy consumption of the building which is realized in form of a periodically graphing of the energy consumption via a bar graph as an energy cascade, weak points can be clearly identified and measures for improvement can be proposed. Due to periodic re-graphing changing boundary conditions may lead to a re-assessment with new properties for improvements.

In the scope of the proposed monitoring and analyzing method standardized concepts, standardized calculation models and standardized process analysis for determining potentials for reducing energy consumption rates of the individual parameters can be used. It is possible to make use both of best practice and already available experience. During the proposed analysis, recourse may be made to successful and proven concepts, calculation models and process analyses and, therefore, enables particularly good potential savings to be determined.

In a further step detailed planning of improvement measures for reducing energy consumption rates and, in still another step an appropriate implementation can be carried out.

A particularly lasting reduction in energy consumption is made possible by the fact that the steps of periodically graphing the energy consumption of the at least one building via a bar graph starting from the building type specific theoretical energy consumption optimum value and arriving at a current energy consumption of the at least one building by adding the provided, partly retrieved single rates of the respective parameters in groups may comprise a periodically still more often repeated re-graphing of the rates of the dynamic parameters associated with the actual use of the building. The repetition of the graphing of the rates as a whole after a time interval, in particular at the latest after a year, makes it possible to check whether measures have been implemented correctly. Secondly, the effectiveness of those measures for reducing the respective energy consumption rates and the achievement of best practice can be checked.

The details of one or more implementations are set forth in the accompanying drawings and the description below. Other features will be apparent from the description of the drawings and from the claims.

### Brief description of the Drawings

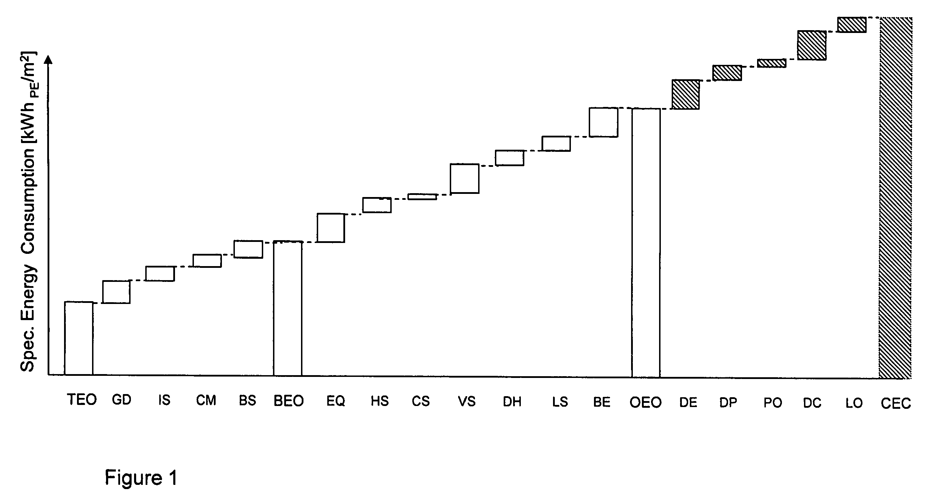

In the drawings, Figure 1 shows a schematic representation of an energy cascade as provided by a possible embodiment of the proposed method.

### Detailed Description

Figure 1 shows a schematic presentation of an energy loss cascade as provided by an implementation of the proposed method for monitoring and analyzing energy consumption of an industrial, commercial or administrative building. The energy cascade as shown in Figure 1 is represented as a bar graph starting from a theoretical energy consumption optimum value TEO and arriving at a current energy consumption CEC of the underlying industrial, commercial or administrative building by adding afore-provided, partly afore-retrieved single energy consumption rates of respective afore-identified parameters in groups thus forming an energy cascade. The parameters contributing to an increased energy consumption of the building with respect to the building type specific theoretical energy consumption optimum value TEO are first identified and grouped accordingly with respect to their corresponding origin. The energy consumption is shown in Figure 1 as a specific energy consumption in terms of kWh_{PE}/m². wherein the index PE stands for Primary Energy. It is also possible to provide the specific energy consumption in terms of kWh_{PE}/m³. This depends on what is to be considered, either primarily a surface of a respective building or a volume of a respective building, such as in the case of storage buildings. It can be advantageous to use both reference areas in parallel.

Primary energy is energy contained in raw fuels and any other forms of energy received by a system as input to the system. The concept is used especially in energy statistics in the course of compilation of energy balances. Primary energy includes non-renewable energy and renewable energy.

Primary energies are transformed in energy conversion processes to more convenient forms of energy, such as electrical energy and cleaner fuels. In energy statistics these forms are called secondary energy. Secondary energy is a energy which has been transformed from one form to another. Electricity is the most common example being transformed from coal, oil, natural gas, wind, etc.

For the sake of comparability, it is crucial to define factors for the energy management system, which make consumptions of various forms of secondary energy comparable. In order to achieve this, the transformation process from primary energy to secondary energy is applied backwards using accepted factors. It is in principle up to the team applying the system to define and agree upon those factors. As a standard, the following transformations are normally used:
1 kWh (electrical) = 1 kWh(PE) / 0.40
1 kWh (steam)=1 kWh (PE heat content of steam) / 0.9
1 kWh (cooling energy) = (1 kWh(PE) * 0.40) * COP (¹)
(¹) COP = coefficient of performance of the cooling device

These equations are based upon commonly achieved efficiencies. They disregard the efficiency of a local system which supplies an industrial, commercial or administrative building, but create the situation of total comparability of various buildings consuming secondary energy and also illustrate the effects of substituting one form of secondary energy with another correctly. In order to follow different goals, like benchmarking and comparing in-house generations of steam with best-in-class installations, one could use more ambitious efficiency factors in the equations shown above to design the management system in the desired fashion.

The first group of parameters which can be identified for an industrial, commercial or administrative building can be classified as parameters due to intrinsic characteristics of the respective industrial, commercial or administrative building which generally underlie a building design and layout. These parameters comprise inter alia the geometric design (GD) as ratio of the surface area to the heated volume, shading facilities, ratio of glazings, orientation/zoning, and an infrastructure/location (IS) in which the respective building is located and operating. Furthermore, building services (BS) and construction materials (CM) are to be considered. If of significance, addition of the parameters "routing of the technical installations" (RO) and "usage distribution of footage" (UF) could be beneficial for the monitoring and analysis of the energy consumption. For each of those identified and classified parameters respective energy contribution rates which are caused by those parameters, respectively, can be determined, provided and added to the energy consumption optimum value TEO which is represented in Figure 1 by respective bars identified as GD, IS, CM and BS, respectively. The parameters "routing of the technical installations" and "usage distribution of footage" are not shown in Figure 1 but their respective energy contribution rates could also be easily represented in the energy cascade by respective bars RO and UF. By adding to the energy consumption optimum value TEO the respective energy contribution rates of the building design and layout an energy consumption value BEO is reached which can be called a "building energy optimum" taking into account a specific design and a specific given infrastructure/location.

Starting from the building energy optimum BEO there are further parameters which contribute to a further increase of the energy consumption of the underlying industrial, commercial or administrative building, namely, due to optimised designated operating conditions in an actual state of the building. This can be, for example, a specific existing equipment EQ which is available for operating the industrial, commercial or administrative building. The term "equipment" of an actual state refers to existing control systems, shading facilities, light directing systems and energy distribution systems. Further, technical systems which are provided in a building in an actual state such as heating systems (HS), cooling systems (CS), ventilation systems (VS), domestic hotwater (DH) and lighting systems (LS), also form part of the optimised designated operating conditions in an actual state of the building, i.e. they fall in the category of the optimised designated operating conditions in an actual state of the building.

With respect to the heating systems the heating type and the tube insulation may have a great influence on the energy consumption of the respective building.

Ventilations systems may provide a more or less heat recovery, thus playing a decisive role in the energy consumption of the respective building.

Furthermore, a heat loss via the thermally relevant building surface (building envelope, BE) is to be considered when being concerned with the category of the designated operating conditions in an actual state of the building.

Possible utilization variants such as modifications of zone occupation ranks also among the optimised designated operating conditions in an actual state of a respective building. Further operating conditions can be designated and grouped under this category. Further optimised operating conditions which are to be considered are to be chosen on an individual basis in dependence on the building under control.

Again, for each of those parameters contributing to an increased energy consumption of the building respective energy contribution rates have to be provided, partly retrieved, which are then to be added to the already computed building energy optimum BEO, thus, further getting up in the energy cascade to a so-called operational energy optimum OEO identifying a further classification step in the whole energy cascade. The parameters identifying the energy cascade between the building energy optimum BEO and the operational energy optimum OEO can be classified as parameters due to optimised designated operating conditions in an actual state of the building. Those parameters can be influenced by providing a change in the respective equipment, technical systems and utilization variants, thus, enhancing their respective energy contribution rates.

Starting from the operational energy optimum OEO there are series of further parameters contributing to a further increase of the energy consumption of the respective industrial, commercial or administrative building, those parameters being due to an actual use of the building. This last group or class of parameters is generally of dynamic nature. In contrast thereto, the parameters due to intrinsic characteristics of the building and to optimised designated operating conditions in an actual state of the building are generally of static nature.

The last group of parameters comprises inter alia parameters contributing to an energy increase due to deviations from ideal energetic installations (DE), which can be caused, for example, by an individual behavior or by legal requirements, due to deviations from ideal parameters (DP) with respect to temperature profiles, air heating, air change, air moisturization, air quality, lighting. Furthermore, a discrepance between operating time and utilization time can have a great influence on the energy balance of the building. A partial occupation (PO) of the building because of downtimes, vacation time, removals, changes in the occupation density and/or the utilization periods also directly influences the energy balance of the respective building.

Deviations (DC) of the actual climate from the statistic average are also to be taken into account.

Each of those parameters contributes by a specific retrieved energy contribution rate to the energy consumption of the whole building as indicated by the respective single columns. All parameters which cannot be unambiguously assigned to an underlying loss source are grouped here in the category "losses" indicated as LO. By adding all the single energy consumption rates to the afore-determined operational energy optimum OEO the current energy consumption of the underlying industrial, commercial or administrative building CEC is reached. The last group of parameters are, as already mentioned, generally of dynamic nature and, therefore, it seems to be important to perform periodic repeated retrieval and re-graphing of the respective energy consumption rates of those dynamic parameters associated with the actual use of the building in order to get a reliable analysis of the energy consumption of the industrial, commercial or administrative building. The period for the repeated retrieval and re-graphing of the respective energy consumption rates of those parameters might be smaller than a period chosen for the periodic provision and graphing of the energy consumption rates of the entirety of parameters. As already mentioned before it might be import with respect to an influencing factor of the climate on some parameters to differentiate additionally between different times of the year when retrieving the respective parameter. In case of a new building it is possible to provide differentiating measurement technology in order to determine the energy contribution rates of individual contributing parameters. In the case of an older building the determination of the energy contribution rates of the individual parameters might be more difficult. However, in the event that a direct measurement is not possible, the energy contribution rates of the individual parameters can be received either by appropriate approximations or by a calculation in retrospect.

Furthermore, it seems to be suitable to compute for at least one or some of the parameters of the energy cascade a so-called best demonstrated mode which demonstrates an expected proportion of the respective energy contribution rates of the corresponding parameters. The best demonstrated mode can be derived from a history of the energy contribution rates of the respective parameters measured over the course of a pre-defined time period wherein a pre-given percentage of the lowest of those energy consumption rates is used for determining the best demonstrated mode, respectively.

On the basis of such a determined best demonstrated mode the energy contribution rates of the respective parameters can be continuously monitored and controlled.

Such a best demonstrated mode determined for any suitable number of parameters can be used to build a predictive model of a pattern of behavior of the respective parameters over time. A best demonstrated mode can further be continually refined in response to new measurements of the energy contribution rates of the respective parameters.

Furthermore, the best demonstrated mode can be used to build a respective temporary model of the current behavior of the corresponding parameters.

The usage of such a best demonstrated mode for respective parameters is useful to indicate a potential possible enhancement of the energy consumption rates of the respective single parameters and helps to influence explicitly those parameters which are realistic to be influenced effectively.

Furthermore, it is also possible that an alert is triggered when the energy consumption rate of at least one parameter for which a best demonstrated mode is determined, is detected to deviate unexpectedly from this best demonstrated mode.

Implementations of the various techniques described herein and associated with the proposed method and system may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) needed for implementation of the proposed method and system, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments of the present disclosure.

## Claims

1. Computer-implemented method for monitoring and analyzing energy consumption of at least one industrial building, the method comprising
determining a building type specific theoretical energy consumption optimum value (TEO) based on a corresponding modeled building,
identifying and grouping parameters contributing to an increased energy consumption of the building due to an actual use of the building (CEC), due to intrinsic characteristics of the building (BEO), due to optimised designated operating conditions in an actual state of the building (OEO), respectively,
providing energy contribution rates of the respective parameters, partly by an automatic, and whenever required, periodic retrieval, and
periodically graphing the energy consumption of the at least one building via a bar graph starting from the building type specific theoretical energy consumption optimum value and arriving at a current energy consumption of the at least one building by adding the provided single energy consumption rates of the respective parameters in groups thus forming an energy cascade which allows to monitor at least a part of the individual parameters and to compare the current energy consumption of the at least one building with an energy consumption of another building and/or with a previous
energy consumption of the at least one building with respect to the individual parameters.

2. The method according to claim 1 wherein the energy consumption of the at least one building is normalized using the building type specific theoretical energy consumption optimum value, thus allowing a building type independent comparison of the energy consumption of the at least one building with an energy consumption of another building with respect to the individual parameters.

3. The method according to claim 1 or 2 wherein the steps of determining the building type specific theoretical energy consumption optimum value based on a corresponding modeled building, and of identifying and grouping the parameters are standardized.

4. The method according to claim 1, 2 or 3 wherein the modeled building is planned as an ideal building for use for a specific industrial purpose exempt from further influencing factors such as characteristics of the location infrastructure, climatic conditions, and equipment.

5. The method according to any one of the preceding claims wherein the parameters are classified in static parameters and dynamic parameters.

6. The method according to claim 5 wherein the dynamic parameters are taken from the group consisting of deviations from ideal energetic settings, partial utilization of the building, deviations of the climatic conditions from statistic mean values, and deviations from ideal installation settings.

7. The method according to claim 5 wherein the static parameters are taken from the group consisting of heating installation, cooling system, ventilation, lighting, equipment, heat losses via thermally relevant building surfaces, utilization variants, choice of location, building construction, building services, and building geometry.

8. The method according to claim 5 or 6 wherein the step of periodically graphing the energy consumption of the at least one building by adding the retrieved single rates of the respective parameters in groups comprises a periodically repeated re-graphing of the rates of the dynamic parameters associated with the actual use of the building.

9. The method according to claim 8 further comprising the step of computing for at least one of the parameters of the energy cascade a best demonstrated mode, thus demonstrating an expected proportion of the respective energy contribution rate of the at least one parameter.

10. The method according to claim 9 wherein the best demonstrated mode is derived from a history of the energy contribution rates of the at least one parameter measured over the course of a pre-defined time period wherein a pre-given percentage of the lowest of those energy consumption rates is used for determining the best demonstrated mode.

11. The method according to claim 9 or 10 wherein the energy contribution rates of the at least one parameter are continuously monitored and controlled on the basis of the best demonstrated mode.

12. The method according to any one of claims 9 to 11 wherein the best demonstrated mode is used to build a predictive model of a pattern of behavior of the respective at least one parameter over time.

13. The method according to any one of claims 9 to 12 wherein the best demonstrated mode is continually refined in response to new measurements of the energy contribution rates of the at least one parameter.

14. The method according to any one of claims 9 to 13 wherein the best demonstrated mode is used to build a temporary model of the current behavior of the at least one parameter.

15. The method according to any one of the claims 9 to 14 wherein an alert is triggered when the energy consumption rate of the at least one parameter is detected to deviate unexpectedly from the best demonstrated mode.

16. A computer-program product tangibly embodied in an information carrier, the computer-program product comprising instructions that when executed cause a processor to perform the method to monitor and analyze energy consumption of at least one building according to any one of claims 1 to 15.

17. An energy management system comprising:
a modeling means configured to determine, based on a modeled building, a building type specific theoretical energy consumption optimum value;
an analyzing means configured to identify and group parameters contributing to an increased energy consumption of the building due to an actual use of the building, due to internal characteristics of the building, due to optimised designated operating conditions in an actual state of the building, respectively;
a provisioning means configured to provide energy contribution rates of the respective parameters, the provisioning means comprising a retrieval means configured for automatic and whenever required periodic retrieval of energy contribution rates of at least a part of the respective parameters, and
a monitor and control means configured for periodically graphing the energy consumption of the at least one building via a bar graph starting from the theoretical energy consumption optimum value and arriving at a current energy consumption of the at least one building by adding the provided single energy consumption rates of the respective parameters in groups thus forming an energy cascade which allows to monitor at least a part of the individual parameters and to compare the current energy consumption of the at least one building with an energy consumption of another building and/or with a previous energy consumption of the at least one building with respect to the individual parameters.
